Europäisches Patentamt

European Patent Office

Office européen des brevets

(11) Publication number: **0 242 743 B1**

# EUROPEAN PATENT SPECIFICATION

(45) Date of publication of patent specification: **04.08.93**  (51) Int. Cl.5: **G10L 5/06**

(21) Application number: **87105363.3**

(22) Date of filing: **10.04.87**

(54) **Speech recognition system.**

(30) Priority: **25.04.86 US 856534**

(43) Date of publication of application:
**28.10.87 Bulletin 87/44**

(45) Publication of the grant of the patent:
**04.08.93 Bulletin 93/31**

(84) Designated Contracting States:
**DE FR GB**

(56) References cited:
**WO-A-84/03983**

**SYSTEMS-COMPUTERS-CONTROLS, vol. 15, no. 4, 1984, pages 80-88, Scripta Publishing Co.; S. HAYAMIZU et al.: "Experimental studies on the connected-words recognition using continuous dynamic programming"**

**RADIO AND ELECTRONIC ENGINEER, vol. 53, no. 4, April 1983, pages 166-175, IERE Crown Copyright Reserved, London, GB; J.S. BRIDLE et al.: "Continuous connected word recognition using whole word templates"**

(73) Proprietor: **TEXAS INSTRUMENTS INCORPORATED**
**13500 North Central Expressway**
**Dallas Texas 75265(US)**

(72) Inventor: **Fisher, William M.**
**1920 Boulder Drive**
**Plano, Texas 75023(US)**
Inventor: **McMahan, Michael L.**
**3817 Merriman Drive**
**Plano, Texas 75074(US)**
Inventor: **Doddington, George R.**
**910 St. Lukes Drive**
**Richardson, Texas 75080(US)**
Inventor: **Bocchieri, Enrico L.**
**12250 Abrams Road 1135**
**Dallas, Texas 75243(US)**

(74) Representative: **Leiser, Gottfried, Dipl.-Ing.**
**Prinz & Partner, Manzingerweg 7**
**W-8000 München 60 (DE)**

**EP 0 242 743 B1**

EP 0 242 743 B1

TECHNOLOGY AND SCIENCE OF INFORMAT-
ICS, vol. 1, no. 3, 1983, pages 189-203, North
Oxford Academic Afcet Brodas, Oxford, GB;
P. OUINTON: "Use of syntactic constraints
for continuous speech recognition"

IEEE TRANSACTIONS ON ACOUSTICS,
SPEECH AND SIGNAL PROCESSING, vol.
ASSP-33, no. 3, June 1985, pages 561-573,
IEEE, New York, US; L.R. RABINER et al.: "A
speaker-independent, syntax-directed, con-
nected word recognition system based on
hidden Markov models and level building"

SYSTEMS-COMPUTERS-CONTROLS, vol. 12,
no. 1, January/February 1981, pages 28-37,
Scripta Publishing Co., Silver Spring, Mary-
land, US; J. MIWA et al.: "A method of spok-
en word recognition using nonlinear spec-
tral matching"

PROCEEDINGS OF THE FOURTH INTERNA-
TIONAL JOINT CONFERENCE ON PATTERN
RECOGNITION, Kyoto, 7th-10th November
1978, pages 1009-1011; R. NAKATSU et al.:
"Speech recognition of connected words"

**Description**

BACKGROUND AND SUMMARY OF THE INVENTION

The present invention relates to a speech recognition system as defined in the precharacterizing part of claim 1. Further it relates to a method for determining a best sentence hypothesis corresponding to a sequence of hypothesized words.

Computer recognition of speech has heretofore been a formidable problem Rather than approach the entire problem, attempts have been made to restrict the problem to specific areas, thus simplifying the recognition task. Much previous work has been done on isolated word recognition, both speaker dependent and speaker independent, and digit recognition. Current systems are able to perform acceptably well for some applications, although by no means is recognition under even highly constrained circumstances completely reliable.

The problem of Continuous Word Recognition (CWR) is more difficult than isolated word recognition. Greater difficulties are encountered in determining which words are actually spoken, as well as how they should be linked together to form sentences.

Attempts to recognize all spoken sentences without any restraints does not appear to be within the capability of current technology. Prior attempts to narrow the problem area have resulted in use of grammars or other constricting methods to determine which words are allowed to follow other words. When a word is recognized, a determination is made of a set of next words which are allowed by the grammar. A word hypothesizer is then instructed to try to match the following utterance with that set.

Such prior art solutions produce systems which are too tightly constrained in terms of vocabulary and grammar which can be handled, and result in unacceptably high recognition error rates. If an error occurs anywhere during an utterance, it is often difficult or impossible to recover, and the speech sequence must be aborted and started over.

In "Sys. Comp. Cont., 4/84, pp. 80-88" a speech recognition system is disclosed, but it is clearly stated that no grammatical constraint is introduced into the speech recognition process.

Further, in "Rad. Elec. Eng., 53/4 1983, pp. 166-175" a word recognition system is disclosed, which prevents input from being recognised as a phrase which is just nonsense.

ASSP -33 (1985) June, No. 3, pp. 561-573, disclose an LPC analysis of an unknown word string and generation of a syntax (deterministic grammar) describing how vocabulary words are concatenated. A set of optimal, syntax constrained matches of sequences of word hidden Mark or Models to an unknown word string is derived and selection of the preferred string made.

It is therefore an object of the present invention to provide a robust speech recognition system which can handle relatively complex vocabularies and grammars. It is another object of the present invention to provide a speech recognition system which can consider several sentence alternatives in parallel, and select the best one.

According to the invention, the speech recognition system is characterized by the characterising features of claim 1.

The method according to the invention comprises the steps of:

(a) generating all possible work hypotheses for an utterance and comparing each hypothesized word to a grammar specification;

(b) determining whether, within the constraints of the grammar, each hypothesized word can be validly attached to the end of any existing partial sentence hypothesis and identifying such existing partial sentence hypotheses;

(c) creating new partial sentence hypotheses by attaching each hypothesized word to the end of an identified partial sentence hypothesis for each valid attachment;

(d) determining whether any partial sentence hypotheses are complete sentence hypotheses within the grammar specification;

(e) calculating a complete sentence hypothesis error for each complete sentence hypothesis, including

(e.1) associating a gap error with each hypothesized word which begins after the end of the last word in the partial sentence hypothesis identified in step (b); and

(f) selecting a complete sentence hypothesis based on the results of step (e).

The novel features which characterize the present invention are defined by the claims. The foregoing and other objects and advantages of the present invention will hereafter appear, and for purposes of illustration, but not of limitation, a preferred embodiment is shown in the accompanying drawings.

3

BRIEF DESCRIPTION OF THE DRAWINGS

Figure 1 is a block diagram of a speech recognition system;

Figure 2 is a data object for a word hypothesis;

Figure 3 is a timing diagram for three hypotheses of an utterance;

Figure 4 is a timing diagram for an utterance;

Figure 5 is a graph showing error to be attributed to overlap and gaps in speech signals;

Figure 6 is a state diagram defining a grammar for use in speech recognition;

Figure 7 is a detailed diagram of a portion of Figure 6;

Figure 8 is a portion of a state diagram used in grammar definition illustrating transitional states:

Figure 9 is a state diagram illustrating the use of multiple grammar subsets: and

Figure 10 is a data object for a sentence hypothesis.

DESCRIPTION OF THE PREFERRED EMBODIMENT

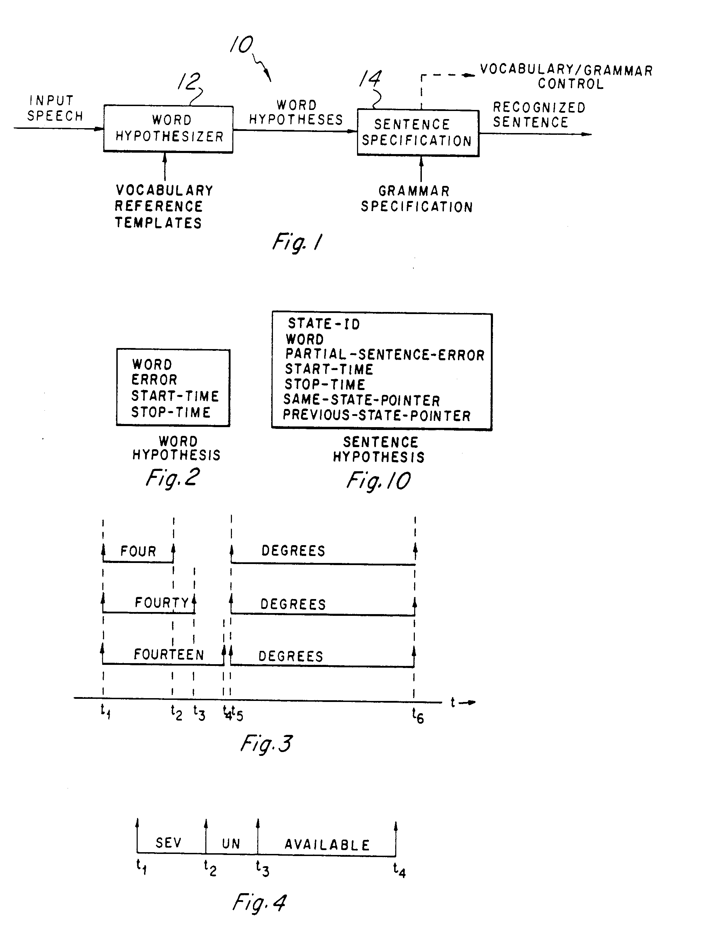

Figure 1 shows a block diagram of a speech recognition system 10 according to the present invention. A word hypothesizer 12 accepts incoming speech signals, compares them to reference templates in its vocabulary, and generates word hypotheses. The input speech signals are preferably digitized signals, and the word hypothesizer 12 operates by dividing a sequence of speech samples into frames, extracting linear predictive coding (LPC) parameters, transforming the LPC parameters to a set of uncorrelated features, the Principal Feature Vector (PFV), and comparing them with the PFV parameters stored in vocabulary reference templates. Word hypothesizers generally are known in the art, and examples of hypothesizers which may be used with the present invention are described in U. S. Patent 4 831 551. SPEAKER-DEPENDENT CONNECTED-SPEECH WORD RECOGNIZER, by George Doddington, et al. issued May 16, 1989, assigned to Texas Instruments, the assignee of the present application, and U. S. Patent 4 908 865, SPEAKER INDEPENDENT SPEECH RECOGNITION METHOD AND SYSTEM, by George Doddington, et al. issued March 13, 1990. assigned to Texas Instruments. A description of the use of the PFV can be found in Doddington, et al. RECOGNITION OF SPEECH UNDER STRESS AND IN NOISE, Proceedings of the ICASSP. 1986. number 14.10. page 733.

The information contained in each word hypothesis is shown in Figure 2. This information consists of the hypothesized WORD, an ERROR value, and START and STOP TIMES for the word. The value ERROR indicates the confidence which the hypothesizer 12 places in its guess, and is determined by an appropriate metric indicating the "distance" between the template of the hypothesized word and the parameters of the actual word. A relatively large value for ERROR indicates a greater likelihood that the hypothesis is incorrect, while a relatively smaller value for ERROR indicates an increased likelihood that the word was correctly recognized.

START-TIME and STOP-TIME are the actual start and stop times of the input speech vocalizations which generated the word hypothesis. The length of the actual utterance is given by (STOP-TIME) - (START-TIME). These values are used by a sentence recognizer 14, as described below, in order to improve overall recognition.

The word hypotheses are sent to the sentence recognizer 14, which attempts to construct sentences out of them. A grammar specification is used to assist the recognizer 14 in assembling the hypotheses into sentences. The grammar is preferably a finite-state grammar, and restricts those sentences which are recognized as valid by the system 10. Once the sentence recognizer 14 successfully recognizes a sentence, the recognized sentence is output from the speech recognition system 10.

Unlike prior art systems, the word hypothesizer 12 and the sentence recognizer 14 are preferably not closely coupled. In other words, there is no direct feedback between the sentence recognizer 14 and the word hypothesizer 12. The word hypothesizer 12 constantly generates all hypotheses which match its reference templates. This is a departure from prior art systems that use a sentence recognizer which controls the word hypothesizer, constraining it to hypothesize only words which are considered to be valid next words by the recognizer. The present approach causes the hypothesizer 12 to generate a greater number of possible words, and increases the complexity of the sentence recognizer 14. In return, the system has a greater flexibility and the ability to "change its mind" about its current location in the grammar.

As used herein, the terms "word" and "sentence" are not restricted to their common meanings. As used herein, a word is some basic unit of speech utterance, and a sentence is some structure made up of such basic units. For example, a "word" could be a phoneme, and a "sentence", which is a structure made up of such phonemes, could correspond to English words. Or, the basic unit of utterance could be a phrase, so that a "word" would actually consist of three or four English words, and a "sentence" would be a structure comprised of these phrases. Thus, while the embodiment described herein uses the terms "words" and "sentences" to mean English words and English sentences as constrained by a selected grammar, it will be understood that the present invention is not so limited.

The recognition thresholds of word hypothesizer 12 are preferably set to a level where many hypotheses are generated. That is, the constraints for determining whether a valid hypothesis has been made are loosened, or broadened. This means that the hypothesizer 12 will often generate multiple hypotheses for a single utterance.

Such a situation is shown in Figure 3. This illustrates several hypotheses that may be generated by the utterance "FOURTEEN DEGREES". Assuming the hypothesizer's vocabulary includes the words "FOUR", "FORTY" and "FOURTEEN", it is likely that the hypothesizer 12 will generate all three of these words as valid hypotheses during the utterance of the word "FOURTEEN". If the speech system is being used to input information to a navigational system, for example, it is important that the sentence recognizer 14 be able to discriminate between the phrases "FOUR DEGREES", "FORTY DEGREES" and "FOURTEEN DEGREES".

The sentence recognizer 14 of the present invention makes this discrimination by introducing error terms for overlap of or gaps between words, in addition to those error terms which indicate confidence in recognition of the words themselves. The magnitude of the gap and overlap error terms increases with the degree of the misfit between consecutive words. The hypothesis "FOUR DEGREES" has a gap of duration $t_5 - t_2$. "FORTY DEGREES" has a gap duration of $t_5 - t_3$. and "FOURTEEN DEGREES" has a gap duration of $t_5 - t_4$. The sentence recognizer 14 calculates these gap durations, and the corresponding gap errors, by making use of the start time and stop time information transmitted from the word hypothesizer 12 as part of the word hypothesis. In Figure 3, assuming that the words "FOUR", "FORTY" and "FOURTEEN" generate approximately equal word errors, which is a reasonable assumption, the sentence recognizer 14 will select the phrase "FOURTEEN DEGREES" as the best fit because such selection minimizes the gap errors. The inclusion of gap errors in partial and total sentence error calculations causes the sentence recognizer 14 to prefer hypotheses which explain a greater proportion of the total incoming utterance.

Figure 4 illustrates the related problem of overlap. It is assumed that the word hypothesizer 12 recognizes the words "SEVEN", "AVAILABLE" and "UNAVAILABLE". It is also assumed that the grammar allows the sentence fragments "SEVEN AVAILABLE" and "SEVEN UNAVAILABLE".

When the phrase "SEVEN AVAILABLE" is spoken as a continuous utterance, the word hypothesizer 12 can be expected to generate the hypothesis "SEVEN" at time $t_3$, and the hypotheses "AVAILABLE" and "UNAVAILABLE" at time $t_4$. Both of these latter hypotheses may have approximately the same word error. The sentence recognizer 14 determines the correct utterance by detecting and preferring the lack of overlap between the word "SEVEN" and "AVAILABLE", whereas the hypothesis "SEVEN UNAVAILABLE" gives an overlap having duration $t_3 - t_2$.

The error function for a sentence hypothesis, or a partial sentence hypothesis up to a given point, is:

$$\sum_{i=1}^{N+1} EW_i * (t_2^i - t_1^i) - ERR(t_1^i, t_2^{(i-1)}) \qquad (1)$$

$N$ = number of word hypotheses in the sentence

$EW_i$ =

$$t_1^i = \text{the beginning time of word hypothesis i}$$

$$t_2^i = \text{the ending time of word hypothesis i}$$

average (frame) error for word hypothesis i $t_2^0$ = the beginning of speech time

$$t_1^{N-1} = \text{the end-of-utterance time}$$

*ERR* = error function for gap and overlap errors

$$\text{overlap if } t_1^i < t_2^{i-1}$$

$$\text{gap if } t_1^i > t_2^{i-1}$$

In the simple case, the functions EG and EO can be linear. That is, the gap and overlap errors increase linearly with increasing gap and overlap durations.

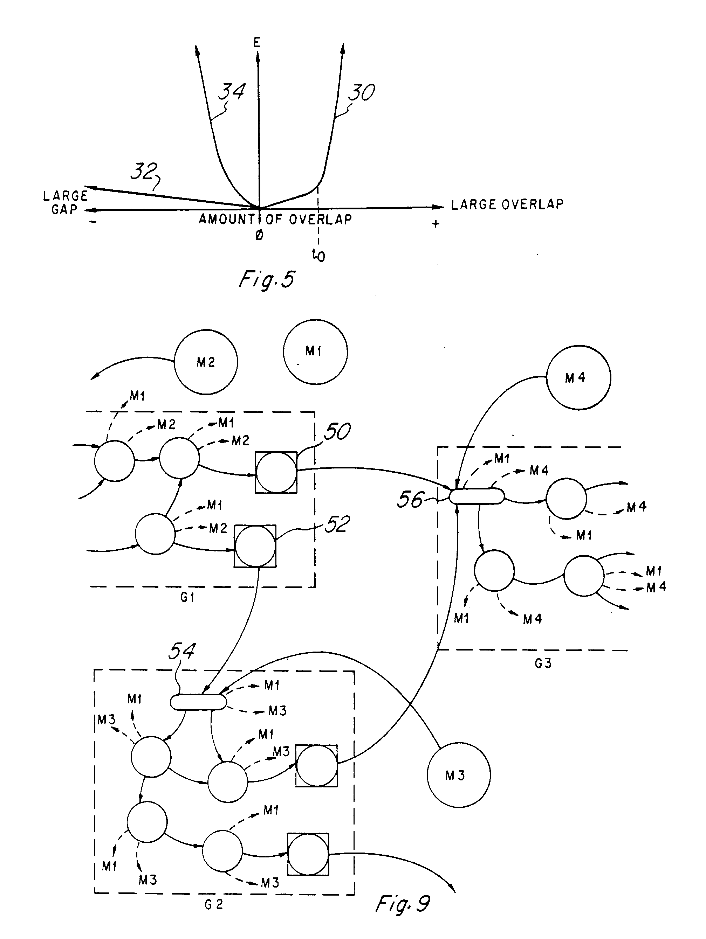

To improve accuracy, non-linear error functions may be used. Figure 5 shows a graph of preferred functions for overlap and gap error calculations. When the amount of overlap is zero, no additional error term is introduced. When the amount of overlap is positive, an overlap has occurred, and when the amount of overlap is negative a gap between word hypotheses has occurred.

Curve 30 on the right side of Figure 5 shows the desired error function for overlap. When the amount of overlap is fairly small, up to time $t_0$, the overlap error is small. For overlap greater than $t_0$, the overlap error rises rapidly. This type of function takes into account co-articulation effects that often occur between words. That is, if approximately the same sound ends one word and begins a following word, that sound is usually uttered as only a single sound. The time $t_0$ will of course depend upon the particularities of an implementation, but is preferably on the order of one-half phoneme in length, being approximately 60 milliseconds. By the time an overlap reaches a duration of 150 to 200 milliseconds, the overlap penalty should be fairly high. Of course, all of these numbers may be modified greatly depending upon circumstances such as talking speed of the speaker.

Gap errors are preferably divided into two classes as shown on the left hand side of Figure 5. A gap between hypotheses that occurs when nothing is being said, such as when a speaker pauses to consider his next word, should not be heavily penalized. Thus, when the energy of the input speech signal indicates a value below some threshold, the sentence recognizer determines that nothing is being spoken and applies a low error value as shown by the lower curve 32. This low error value can be zero if desired. If, however, a gap error occurs between two hypotheses while speech energy is being received, a relatively high error value is assigned to the gap error as shown by the upper curve 34. This takes into account the fact that consecutive word hypotheses which are separated by a gap, while it is known that the speaker is speaking, are presumed to be missing part of the utterance and will tend to be rejected. This is shown, for example, in Figure 3, where a hypothesis of a gap while the speaker is actually saying "TEEN" results in a large gap error and rejection of the sentence.

Gap and overlap error calculations can be used at the beginning and end of sentences. Any delay between the beginning of the sentence and the start of a hypothesized first word is counted as gap error, as is delay between a hypothesized last word and the end of the sentence. Precise location of the sentence beginning and end points is not necessary. It will be appreciated that all hypotheses will show gap error when the sentence beginning is before the beginning of the earliest hypothesized word. In fact, these gap errors will cancel out when comparing sentence errors. Therefore, it is only necessary that the beginning of the sentence ($t_2^0$) be no later than the start of the earliest hypothesized word ($t_1^i$). Sentence hypotheses having a first word which begins later than this will be penalized with a gap error. This will cause the sentence recognizer 14 to tend to prefer sentence hypotheses which account for speech starting at the beginning of an utterance. A similar calculation holds at the end of a sentence, where a hypothesis that the sentence is complete is penalized by gap error if the speaker continues to talk.

In order to improve the performance of the speech recognizer 10, it is preferred to constrict the set of sentences which are allowed. The sentence recognizer 14 uses some type of grammar in order to restrict the choice of sentences which can be identified. For ease of implementation this grammar is preferably a finite state grammar, which has a finite number of nodes, or states.

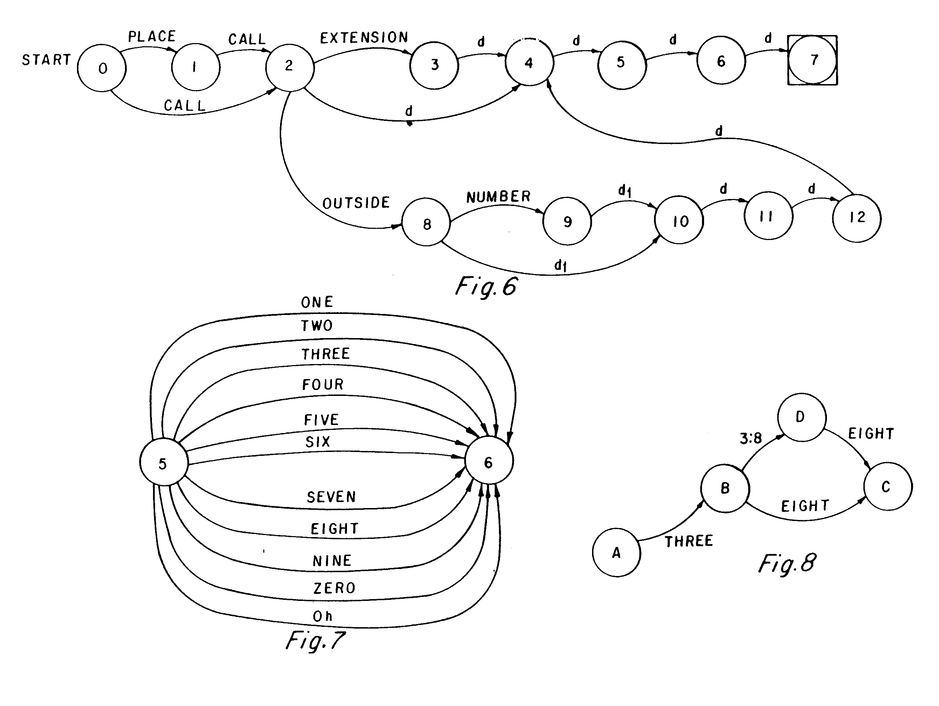

Figure 6 shows a graph of a very simple finite-state grammar. This grammar would be useful for using spoken instructions to place telephone calls. As shown in Figure 6. the grammar can be used to call an outside number, which requires that a 7-digit number be used, or an internal number which requires only the use of a 4-digit extension. The utterances which cause each transition are shown next to the transitional paths on the diagram. The transitions marked with "d" are shown in more detail in Figure 7, which indicates that any digit may be used. The transition $d_1$, found between state pairs 8, 10 and 9, 10 is more restricted in that the first digit of an exchange cannot begin with 0 or 1.

The set of allowable sentences from the grammar of Figure 6 is shown in Table 1.

The allowed sentences shown in Table I are easily seen to be generated by tracing the connecting arrows on the directed graph of Figure 6. The grammar can be

EP 0 242 743 B1

## TABLE I

CALL dddd
CALL EXTENSION dddd
PLACE CALL dddd
PLACE CALL EXTENSION dddd
CALL OUTSIDE $d_1$dd dddd
CALL OUTSIDE NUMBER $d_1$dd dddd
PLACE CALL OUTSIDE NUMBER $d_1$dd dddd
PLACE CALL OUTSIDE $d_1$dd dddd

considered to be a finite-state machine, with each of the possible states represented by a numbered node. All possible sentences allowed by the grammar can be generated by tracing all possible paths through the directed graph. For example, the allowed sentence "CALL EXTENSION dddd" causes the grammar to pass through states 0 (start), 2, 4, 5, 6 and 7. Node 7 has a square around it to indicate that it is a terminal node. That is, when the sentence recognizer 14 reaches node 7, it hypothesizes that a complete sentence has been uttered, and proceeds accordingly.

The grammar of the sentence recognizer 14, as represented by the graph of Figure 6, can be used in different ways to assist in the recognition of an utterance. The simplest way is for the sentence recognizer 14 to control the vocabulary referenced by the word hypothesizer 12, so that, from a given node, only words which fall within the set of allowed next words from that node may be hypothesized by the word hypothesizer 12. For example, in such a system, if the sentence recognizer 14 determined that it was currently at node 2, the word hypothesizer 12 would be constrained by the VOCABULARY CONTROL signal of Figure 2 to recognize only the words "OUTSIDE", "EXTENSION", or a digit. In this type of arrangement, the sentence recognizer 14 is used as a predictor, and is tightly coupled with the word hypothesizer 12 to attempt to improve the performance of the system.

However, such a predictive recognition technique has a number of drawbacks. If the system ever reaches an "incorrect" node, there is no method by which it can recover. In contrast, the preferred embodiment employs a dynamic programming (DP) technique which allows multiple hypotheses to be considered in parallel. Rather than being constrained to a single path through the grammar, the DP technique allows the sentence recognizer to choose the best path given all of the information concerning the various words. This technique utilizes the gap and overlap error technique described previously. It optimizes a given path error at the sentence or partial sentence level rather than at the local optimization level employed by earlier tightly-coupled systems.

In the preferred DP technique, the sentence recognizer 14 receives a word hypotheses from the word hypothesizer 12 and determines all of the nodes in the graph to which that word could apply. For example, in Figure 6, if a digit is uttered the sentence recognizer 14 will try to make that digit correspond with all of nodes 4, 5, 6, 7, 11 and 12. If the uttered digit is in the range 2 - 9, the sentence recognizer 14 will attempt to associate it with node 10 as well.

For each node for which a current hypothesis is valid, the sentence recognizer 14 uses DP with backward pointers to determine all possible sentence fragments for which the current hypothesis would be the latest word. When the current hypothesis is tested on a particular node, that node must have a valid sentence fragment leading to a preceding node in order to create a new valid sentence fragment. For example, when the first digit is hypothesized, the recognizer 14 will try to match that digit with the nodes described above. If a digit is the first utterance of a sentence, the grammar will be in state 0, and the hypothesis of a digit will be rejected as invalid. That is, of the nodes to which a digit can be a valid transition, none of them have a previous state of node 0.

7

If the utterance "CALL" has been received, an entry will be made as a partial sentence which brings the grammar to node 2. If a digit is then hypothesized, node 4 will have a valid previous node (node 2), so a sentence fragment will be hypothesized as "CALL first-digit". Nodes 5, 6, 7, 10, 11 and 12 will still not generate valid partial sentences because there does not exist a valid partial sentence terminating in a preceding node to any of these nodes.

The DP technique generates a number of hypothesized partial sentences, all of which are considered in parallel. When a sentence hypothesis reaches node 7, a complete sentence is hypothesized. At that point, at least one valid complete sentence has been hypothesized, and a total sentence error is calculated as set forth in equation (1). If the sentence error is too large, due to large errors in words or gap and overlap errors, the sentence hypothesis is rejected. If the sentence error falls below some predetermined threshold, the sentence hypothesis is retained. In the preferred embodiment, a valid sentence hypothesis is accepted as the uttered sentence only if the speaker stops speaking or no better partial sentence hypothesis is generated within a short time. For example, if no utterances are made for 800 milliseconds, the sentence hypothesis can be accepted, as it is assumed that the speaker has finished a sentence in the grammar. If additional utterances are made, and they result in a partial or complete sentence hypothesis having a lower error than the current sentence hypothesis, the sentence recognizer 14 will reject the older sentence hypothesis in favor of the later. If the additional utterances do not generate a partial or complete sentence hypothesis having a lower error than the current sentence hypothesis, such hypothesis will be accepted. It is not necessary for speech to cease before generating a recognized sentence: such generation is determined by the grammar.

As a simple example, the utterance "CALL dddd (silence)" will cause the sentence recognizer 14 to recognize a complete sentence. For purposes of this description of the recognizer, during recognition of such an utterance it will be assumed that the word hypothesizer 12 generates no "bad" hypotheses. However, in actual use the hypothesizer 12 will generate hypothesis which may not be very good, and the purpose of using the overall sentence error calculation, as well as the various gap and overlap error calculations, is to cause the correct utterance to be recognized in preference to the incorrect ones by a simple comparison of sentence error values.

The hypothesis "CALL" is valid only for node 2, so the sentence recognizer 12 will generate a partial sentence corresponding to node 2 and having the value CALL. When the first digit is received, node 4 is the only valid node for a digit hypothesis that also has a previous node containing a currently valid sentence fragment. That is, a back pointer from node 4 to node 2 shows that there is a sentence fragment corresponding to node 2. Tracing back one step from each of node 5, 6, 7, 10, 11 and 12 does not point to any node which terminates a sentence fragment, so the hypotheses that the first digit applies to nodes 5, 6, 7, 10, 11 or 12 are rejected.

When the second digit is received, it may be applied to node 5 because node 4 was associated with a valid partial sentence as a result of the first digit. Also, the second digit may be hypothesized to apply to node 4. Thus, the sentence recognizer 14 now retains the partial sentence hypotheses "CALL", CALL first-digit", "CALL first-digit second-digit", and "CALL second-digit". If a sentence recognizer were to stop at this point, the fragment "CALL first-digit second-digit" should be preferred because it best explains the received speech data. That is, assuming the word errors for each word to be of approximately the same degree, the longer sentence hypothesis minimizes gap errors.

This procedure is continued until the sentence hypothesis "CALL first-digit second-digit third-digit fourth-digit" is received. At this point, with "fourth-digit" assigned to node 7, a complete sentence is hypothesized. When the speaker quits talking, if the total sentence error as calculated by equation (1) is less than some predetermined threshold, this hypothesis will be accepted as an actual sentence.

A more complicated utterance would be "PLACE CALL OUTSIDE NUMBER 543 6789(silence)". As can be seen by viewing the graph of Figure 6, several partial sentence hypotheses will be considered in parallel by the sentence recognizer 14. For example, the complete sentence "PLACE CALL 5436" will be considered as a valid hypothesis in parallel with the partial sentence "PLACE CALL OUTSIDE NUMBER 543 6". Since a substantial gap exists between the word "CALL" and the first digit, the shorter sentence hypothesis will result in a much larger error calculation when gap errors are included. Thus, the longer hypothesis will eventually be preferred by the sentence recognizer 14.

Table II shows the actions of the sentence recognizer 14 when recognizing the sentence "PLACE CALL OUTSIDE NUMBER 543 6789(silence)". For purposes of illustration, it is again assumed that the word hypothesizer 12 does not generate any fake hypotheses.

For each utterance, Table II shows which nodes of the graph of Figure 6 become associated with it, and shows all back pointers to previously valid nodes. No back pointers are created to nodes which have not yet been associated with any valid partial sentence. Thus, no back pointer is created from node 4 to node 12 until after node 12 has been associated with a hypothesis. This occurs only after the utterance "6" is received.

Since multiple word hypotheses can be associated with each node, Table II differentiates between them with alphabetic suffixes. Thus, node "4a" has the number "5" associated with it, while node "4b" is associated with the utterance "4". A partial or complete sentence hypothesis is defined by backtracking pointers from the current word hypothesis to the start node. For example, according to Table II, the sentence hypothesis "PLACE CALL OUTSIDE NUMBER 543 6789" follows backpointers from node 7 to node 0 in the order 7d. 6d. 5d. 4d. 12a. 11a. 10a. 9. 8. 2. 1. 0. The partial sentence hypothesis "PLACE CALL 543" follows backpointers through nodes 6a. 5a. 4a. 2. 1. 0.

TABLE II

| UTTERANCE | BECOMES ASSOCIATED WITH NODE NUMBER(S) | BACKPOINTER TO NODE NUMBER |
|---|---|---|
| PLACE | 1 | 0(START) |
| CALL | 2 | 1 |
| OUTSIDE | 8 | 2 |
| NUMBER | 9 | 8 |
| "5" | 4a | 2 |
|  | 10a | 9 |
| "4" | 4b | 2 |
|  | 5a | 4a |
|  | 10b | 9 |
|  | 11a | 10a |
| "3" | 4c | 2 |
|  | 5b | 4b |
|  | 6a | 5a |
|  | 10c | 9 |
|  | 11b | 10b |
|  | 12a | 11a |
| "6" | 4d | 12 |
|  | 5c | 4c |
|  | 6b | 5b |

|  |  |  |
|---|---|---|
|  | 7a | 6a |
|  | 10d | 9 |
|  | 11c | 10c |
|  | 12b | 11b |
| "7" | 4e | 12a |
|  | 5d | 4d |
|  | 6c | 5c |
|  | 7b | 6b |
|  | 10e | 9 |
|  | 11d | 10d |
|  | 12c | 11c |
| "8" | 4f | 12a |
|  | 5e | 4e |
|  | 6d | 5d |
|  | 7c | 6c |
|  | 10f | 9 |
|  | 11e | 10e |
|  | 12d | 11d |
| "9" | 4g | 12a |
|  | 5f | 4f |
|  | 6e | 5e |
|  | 7d | 6d |
|  | 10g | 9 |
|  | 11f | 10f |
|  | 12e | 11e |

Examination of Table II shows that certain decisions must be made each time a word hypothesis is associated with a node. These decisions involve deciding which node is the correct precursor for each node. For example, when "CALL" is assigned to node 2, the precursor could be either node 0 or node 1. The sentence error calculation (equation 1) is made for each possibility, and the best one selected. As shown in Table II, the selected precursor for node 2 is node 1, which selects the partial sentence hypothesis "PLACE CALL" over "CALL". This selection is made because the partial sentence hypothesis "CALL" includes a gap error corresponding the utterance of the word "PLACE".

Also, there may be multiple hypotheses assigned to a single precursor node. For example, when "7" is assigned to node 5d, possible precursor nodes are 4a, 4b, 4c and 4d. These four potential precursors must be examined, and the best selected. In our example, the partial sentence hypothesis 4d, when combined with 5d, yields the best next partial sentence hypothesis. Depending on the weighting factors given to gap

11

and overlap errors, and the actual word errors, some of the precursor nodes may be selected differently than shown in Table II.

The sentence recognizer 14 creates a new data object each time a word hypothesis is associated with a node and a specific precursor node. Such data object is shown in Figure 10, and acts as a sentence hypothesis for a partial or complete sentence ending in that node. All hypotheses for a given node are formed into a linked list with the SAME-STATE-POINTERs. and nodes are linked to a previous node, using the PREVIOUS-STATE-POINTER.

The error value of a complete sentence hypothesis is calculated by a recursive procedure which traces backpointers from the current node to the previous node, following the path giving the lowest scores. Since the intermediate partial sentence errors are stored with each node, this procedure only has to check back one level of recursion. A top level algorithm for performing such tracing is shown in equations (2) and (3):

$$Sentence\_Error = Partial\_Sentence\_Error(Node\_7) \qquad (2)$$

$$Partial\_Sentence\_Error(node\_n) = Word\_Error(node\_n) + gap\_overlap\_error(node\_n, node\_n - 1) + Partial\_Sentence\_Error(node\_n - 1) \qquad (3)$$

Equations (2) and (3) implement a DP algorithm. Tracing back through the selected nodes gives the sentence having the lowest error. Note that equations (2) and (3) are simply a recursive implementation of equation (1).

As shown in Table II, even a very simple utterance with a very simple grammar can result in a large number of partial sentence hypotheses being considered. In practical systems, computational power and memory resources will not be unlimited, and any of several schemes may be employed to eliminate "bad" partial sentence hypotheses on the fly.

The simplest would be to simply eliminate all partial sentence hypotheses which have a total error greater than a predetermined threshold. This would tend to eliminate partial hypotheses having extremely large gap errors. In the example illustrated in Table II, the partial hypotheses "CALL 8"' is considered valid. In actuality, due to the tremendously large gap errors between "CALL" and "8", such a sentence is unlikely to result in a preferred complete sentence hypothesis. Therefore, the sentence analyzer 14 can reject such partial hypotheses immediately, rather than retain it for later computational steps.

A more restrictive method would be to retain only a single sentence hypothesis for each word hypothesis. In the above example, only the best hypothesis would be assigned to a node, and multiple assignments to a node (eg. 4a, 4b, 4c...) would be eliminated. Such a scheme is somewhat restrictive, and makes a recovery from error more difficult.

By the time all the computations shown in Table II are completed, the sentence recognizer 14 should recognize the actually uttered sentence as its best hypothesis. This hypothesis best accounts for all of the speech data received minimizing gap and overlap errors between recognized words. All other hypotheses introduce gap errors, which give a total sentence error value which is larger than the correct one.

Current CWR systems will attempt to generate a valid sentence when the speaker stops talking. That is, a silence longer than some threshold value causes the recognizer to assume an end of sentence, and try to find the best match. The use of the present approach allows the recognizer 14 to easily understand pauses in the middle of an utterance. The recognizer 14 will not recognize a complete sentence hypothesis if there is a better partial sentence hypothesis. If the speaker pauses in the middle of a sentence, the sentence recognizer 14 will merely wait for speech to continue. A RECOGNIZED SENTENCE will be generated only if a complete sentence hypothesis has less error than some predetermined threshold. Since there is no large gap error associated with gaps of silence, the overall sentence error calculation will not be affected.

Theoretically, there is no limit to the length of the pause. A speaker could begin a sentence, stop, go home for the weekend, and return days later to complete the sentence. If the gap error assigned to silence was zero (which is quite likely), the recognized complete sentence would be identical to that which would be recognized as a result of a single complete utterance. In practice, this is rarely a desirable situation. In order to prevent arbitrarily large gaps from occurring in a sentence, a "time-out" may be used to limit them. If there is silence, or there is no word hypothesized, for a period exceeding the time-out, the sentence recognizer 14 can either output its best partial or complete sentence hypothesis so far, or can abort back to a start state, depending on the implementation or the preferences of the user. Setting a time-out of, for example, one minute causes the system to assume that a user does not intend to finish his sentence, after a pause of that length.

An implementation in FORTRAN of the above-described procedure is attached as ATTACHMENT A. This code has been implemented on a TI-Speech system on a Texas Instruments Personal Computer, using

12

a Texas Instruments TMS320 signal processor.

In order to minimize gap and overlap errors, it is important to recognize that co-articulation and other effects often exist at the transitions between "words". In order to minimize a gap error which might otherwise appear to exist between consecutive spoken words, when that gap error does not actually exist, it may be necessary to introduce extra states into the grammar. For example, it is very common for a speaker to insert a transitional sound between speaking the consecutive digits "3" and "8".

The actual utterance often sounds similar to "three-/IE/-eight", where /IE/ is the transitional sound between the final /I/ of "three" and the initial /E/ of "eight'. Even though the speaker actually left no gap between the digits 3 and 8, the recognizer 14 may add one there, since there will be no word hypothesized for "/IE/". This could distort the calculated error value for the sentence.

Figure 8 shows the insertion of a transition state in a grammar whenever the digits 3 and 8 can form a valid utterance according to the grammar. The transitional utterance is shown in Figure 8 as "3:8", so that speakers which include such a transition will cause the grammar to change states from A to B to D to C instead of directly from A to B to C. Consideration of these types of transitional effects can greatly improve the recognition capability of the system, and is especially useful in speaker independent recognition systems in which the speaking habits of different users may vary.

Figure 9 illustrates additional desirable features of an actual implementation. First, it would be desirable for a system to include "meta-commands". These commands are defined to be those which are a valid transition from every state. Examples of such commands would be "ABORT" and "CANCEL". The ABORT command can be used to reset the recognizer to a start state in the overall grammar regardless of its current position. The CANCEL command can be used to back up to the beginning of the current grammar in a bank-switched grammar as described below. These type of commands are especially useful where the recognizer system echoes the current best partial sentence hypothesis to a visual device such as a computer display screen. The user can observe the actions of the recognizer on the screen, and ABORT or otherwise change his input command as desired. As shown in Figure 9, every state is a valid precursor state for the meta-commands M1, and every state within a grammar is a valid precursor for the appropriate meta-command M2, M3 or M4.

Figure 9 also illustrates another extremely useful feature for systems which have limited computing power. This involves the use of bank-switching of grammars and vocabulary. Figure 9 shows parts of three grammars, G1, G2 and G3, which form part of a larger, more complex grammar. When a terminal node 50, 52 is reached in grammar G1, this indicates to the system that the data for grammars G2 or G3 should be loaded into the system, whichever is appropriate. A transition to the appropriate initial state 54, 56 of the new grammar G2 or G3 is then made automatically. The processor can then continue processing in the new grammar.

The transition to a new grammar or vocabulary is made whenever a terminal node is reached in a previous grammar. It is not necessary that the switching take place at the end of an English sentence, or where there is a pause in speech. Since the grammar can detect the end of a sentence as defined in that grammar while speech continues, the terminal nodes of the subgrammars G1, G2 and G3 can be located as desired, without reference to silences which may occur in the INPUT SPEECH.

The new grammar may also have a new vocabulary associated with it. If the vocabulary of the recognition system is limited due to limited processing or memory capacity, it may be necessary or desirable to switch in a new bank of vocabulary templates when a new grammar is loaded in. It is not necessary that the grammar and vocabularies be bank-switched at the same time, although such a break along common lines would tend to occur in many cases.

The meta-command ABORT should remain valid for all combinations of vocabulary and grammar. The meta-command CANCEL, which resets to the start of the current grammar, differs slightly for each grammar. The meta-commands M2, M3 and M4 reset grammars G1, G2 and G3 respectively. If the CANCEL command is implemented in a system, it should be valid for all combinations of vocabulary and grammar.

The bank-switching of grammars and vocabularies could be termed "virtual grammars", and "virtual vocabularies". This simply means that the grammar or vocabulary which applies to the entire system is larger than can be handled directly by the processor at one time. This is somewhat analogous to the concept of virtual memory in a computer system, where the virtual memory is much larger and can be accessed directly by the processor.

It will be appreciated that bank-switching the vocabulary and grammar implies feedback between the sentence recognizer 14 and the word hypothesizer 12. That is, the word hypothesizer 12 is constrained by the selection of a vocabulary by the sentence recognizer to hypothesize only certain words. Thus, in bank-switched systems, the decoupling of the word hypothesizer 12 and the sentence recognizer 14 is not complete. However, the coupling is much less than occurs in typical tightly-coupled systems. Free selection of hypotheses within the current vocabulary is still allowed by the bank-switched system. Within the scope of operation of any given vocabulary/grammar combination, the decoupling between the word hypothesizer 12 and the sentence recognizer 14 is complete. That coupling which occurs does so only because of, and to the degree determined by, the limited resources of the system 10.

Some amount of time will be required for the grammar and vocabulary switching operations to take place. Even if this time is only a few tens of milliseconds, this is a long delay for a recognition system which uses data frames typically having a length of ten or twenty milliseconds. It is thus preferable that the system have a buffer which is used for the digitized INPUT SPEECH data. This buffer can continue to collect data while the vocabulary or grammar bank-switching operations are accomplished, and processing can then continue from the point where it left off. This allows a small system to make use of large and complex vocabularies and grammars, without missing any of the incoming speech.

TECHNICAL ADVANTAGES

The speech recognition system described above makes a robust, low-cost system. The use of a decoupled word hypothesizer and sentence recognizer allow much greater flexibility in system operation, and a greater chance to recover from erroneous word hypotheses. The use of gap and overlap errors improves system performance by making the sentence recognizer more tolerant of erroneous hypotheses, since these can be placed in context both as relates to the grammar, and as relates to time. Bank switching of vocabularies and grammars allows a relatively simple system to perform complex tasks, and the implementation of meta-commands allows a user to easily recover from any system errors that do arise.

The system is easily implemented using available technology. The word hypothesizer 12 and sentence recognizer 14, along with associated memory and controllers, can be implemented on a single board for use with a personal computer. For example, TMS320 signal processors can be used for the word hypothesizer 12 and sentence recognizer 14. The recognition procedure described above is easily implemented in machine language, FORTRAN, or as otherwise desired, in accordance with known principles.

The present invention has been illustrated by the system described above, and it will become apparent to those skilled in the art that various modifications and alterations may be made thereto. Such variations fall within the scope of the appended claims.

EP 0 242 743 B1

ATTACHMENT A.1.

```
!GRAMREC2E:
!This is a modified version of GRAMREC2D which modifies the restriction on
!consideration of predecessor sub-sentences and which passes the maximum number
!of sub-sentences as an initialization argument.  This was required because of
!a short-coming in GRAMREC2D.  Specifically, a much larger value of ESS_DELT
!was required in GRAMREC2D than in GRAMREC2C, because of the need to consider
!only those predecessor sub-sentences with errors strictly less than the
!threshold.  Without this restriction, the possibility exists of connecting to
!a sub-sentence which has been previously reused (and thus destroyed).  With
!the restriction, the possibility of missing correct predecessor sub-sentences
!is fairly high unless ESS_DELT is unreasonably large.  To circumvent this, a
!change was made to the restriction for considering predecessor subsentences.
!Specifically, the minimum error for replaced subsentences is computed and is
!used as an upper error bound for considering predecessor sub-sentences.
!
!GRAMREC2D:
!This is a modified version of GRAMREC2C which deletes the use of a maximum
!allowable separation time between adjacent words in a legitimate sentence
!hypothesis.  This requirement was used originally to improve recognition and
!to reduce the number of sentence hypotheses created.  However, the previous
!mc  fication (GRAMREC2C), which eliminates consideration of poor precursor
!sub-sentences, more effectively reduces the number of sub-sentence hypotheses.
!Also, it is discovered that in operational usage long pauses between words
!are often used to allow the user to compose his thoughts.
!
!A second change in GRAMREC2D is based upon the ability to reclaim sub-sentence
!hypothesis storage for old sub-sentences that are excluded from consideration
!because the sub-sentence error is greater than threshold.  This is achieved
!by reusing high-error unproductive sub-sentences.  This is somewhat different
!from GRAMREC2C in the sense that GRAMREC2C restricts insertion of new
!hypotheses, while GRAMREC2D restricts consideration of old SS hypotheses.
!
!GRAMREC2C:
!This is a modified version of GRAMREC2B which inserts new sub-sentence
!hypotheses only if they are good enough when judged against the current
!best sub-sentence.
!
!GRAMREC2B:
!This is a modified version of GRAMREC2, which returns the best sub-sentence
!(  cluding complete sentences if the best sentence has the lowest error) which
!terminates on the input word, rather than returning only complete sentences.
!An additional variable is passed to GPAMREC_MATCH, which provides for logical
!output to indicate when the output word string is a complete sentence.
!
!The search for best is not restricted to complete sentences, so that it is
!possible that a valid sentence terminating on the input word will be blocked
!by a sub-sentence with a better overall sub-sentence error.
!
!This subroutine is upward compatible with GRAMREC2 in the sense that the
!additional logical variable is optional, and if it is not included then
!the subroutine functions as defined before in GRAMREC2.
!
!***********************************************************************************
!
!Bug fix, pointed out by Mike McMahan, need to set ibpbest to zero even when
!the precursor node is the start node
!
!This is a more efficient version of GRAMREC1.  It achieves its efficiency by
!organizing the search for connecting sub-sentences according to precursor node
!and using a pointer array which points to the next previous occurance of the
!selected precursor node.
!
      logical*4 function GRAMREC
```

15

```
!
!This subroutine is used to build a sequence or word recognition hypotheses
!into a valid sentence according to the constraints of a finite-state grammar.
!GRAMREC_INIT initializes the grammar and the recognition parameters.
!GRAMREC_RESET is used to reset the recognizer memory after each sentence.
!GRAMREC_MATCH is used to process each recognition hypothesis in turn.
!
        logical*4 GRAMREC_INIT, GRAMREC_RESET, GRAMREC_MATCH
        parameter (maxwords=300)        ! max # of vocabulary words
        parameter (maxnodes=99)         ! max # of grammar nodes
        parameter (maxwdns=5)           ! max # of nodes containing a word
        parameter (maxpcns=10)          ! max # of precursor nodes for a node
!
!note:  a precursor node is a node pointing to the subject node.
!
        integer*2 nnodes                        ! # of nodes in the grammar
        character*15 word(-1:maxwords)          ! spelling of each vocabulary word
        integer*2 nwdns(-1:maxwords)            ! # of nodes containing each word
        integer*2 wdns(maxwdns,-1:maxwords)     ! nodes containing each word
        integer*2 npcns(maxnodes)               ! # of precursor nodes for each node
        integer*2 pcns(maxpcns,maxnodes)        ! precursor nodes for each node
        integer*2 last_ss(maxnodes)             ! last SS hypothesis for each node
        logical*2 stopnode(maxnodes)            ! stopnode flag
!
        character*(*) GFILE ! name of the grammar definition file
        integer*2 MAX_HYP   ! max # of sub-sentence hypotheses
        integer*2 ID        ! word ID of the input word hypothesis
        integer*2 NWOUT     ! # of words in the output sentence
        integer*2 IDOPT(*)  ! word ID's in best sentence
        real*4 TIMES(2,*)   ! beginning/ending times of words in best sentence
        logical*2 SENTFLG   ! flag indicating if the output is a complete sent
!
        parameter (maxhyp=9999) ! max # of state hypotheses
        parameter (maxlen=20)   ! max # of words in a sentence
        real*4 ehyp(maxhyp)     ! SS (sub-sentence) error for this SS
        real*4 thyp(maxhyp)     ! ending time for last word in this SS
        real*4 bhyp(maxhyp)     ! starting time for last word in this SS
        real*4 berr(maxhyp)     ! best SS error for SS's using this SS
        integer*2 phyp(maxhyp)  ! pointer to previous SS ending with same node
        integer*2 fhyp(maxhyp)  ! pointer to next SS ending with same node
        integer*2 nhyp(maxhyp)  ! node affiliation of last word in SS
        integer*2 ihyp(maxhyp)  ! back pointer to previous word (SS) in this SS
        integer*2 iwrd(maxhyp)  ! last word in this SS
!
        parameter (lug=1)
        logical*2 end_of_sentence !flag to signal successful end-of-sentence
        logical*2 sub_sentence !flag to signal sub-sentence
        integer*4 hyp !hypothesis index
!
        data jhyp/0/, err_max/9E9/, last_ss/maxnodes*0/
!
!*******************************************************************************
!
        entry GRAMREC_INIT (GFILE, MAX_HYP,
        1         ERROR_NULL, ERROR_OVLP, WT_TIME, WT_MULT, ESS_DELT)
!
!This entry point initializes the grammar.
!
!GFILE:         character*(*), the name of the grammar file
!
!MAX_HYP:       integer*2, the maximum number of sub-sentence hypotheses
!
!ERROR_NULL:    real*4 scalar, the penalty (per second) for word underlap
```

ATTACHMENT A.3.

```
!
!ERROR_OVLP:      real*4 scalar, the penalty (per second) for word overlap
!
!WT_TIME:         real*4 scalar, the nominal length of a "long word"
!
!WT_MULT:         real*4 scalar, the favor factor for a nominally long word
!
!ESS_DELT:        real*4 scalar, the maximum difference between the current best
!                             sub-sentence and a legitimate candidate sub-sentence
!
!READ IN THE GRAMMAR
!
        OPEN (unit=lug, name=GFILE, status='old', readonly, shared)
        read (lug,*) nwords, (ix, ix, word(nw), nwdns(nw),
     1        (wdns(j,nw), j=1,nwdns(nw)), nw=1,nwords), nnodes,
     1        (ix, npcns(nn), (pcns(j,nn), j=1,npcns(nn)), nn=1,nnodes)
        CLOSE (unit=lug)
        do nn=1,nnodes
                stopnode(nn) = .false.
        end do
        do j=1,npcns(nnodes) !set end-of-sentence flag for stop nodes
                stopnode(pcns(j,nnodes)) = .true.
        end do
!
!          note:  node = 0 is the start node, node = nnodes is the stop node.
!
        err_null = ERROR_NULL
        err_over = ERROR_OVLP
        rec_wt_time = WT_TIME
        rec_wt_mult = WT_MULT
        max_ss = MAX_HYP
        rec_wta = 2.0*LOG(rec_wt_mult)/rec_wt_time
        err_delt_max = ESS_DELT
        err_thresh = err_delt_max
        err_replaced = err_max
        jhyp = 0
        do n=1,nnodes
                last_ss(n) = 0
        end do
        do n=1,max_ss
                berr(n) = err_max
        end do
        GRAMREC_INIT = .true.
        return
!
!*****************************************************************************
!
        entry GRAMREC_RESET
!
!This entry point resets the input hypothesis counter so that all previous
!word hypotheses are discarded and recognition of a new sentence may begin.
!
        jhyp = 0
        err_thresh = err_delt_max
        err_replaced = err_max
        do n=1,nnodes
                last_ss(n) = 0
        end do
        do n=1,max_ss
                berr(n) = err_max
        end do
        GRAMREC_RESET = .true.
        return
```

ATTACHMENT A.4.

```
!
!*****************************************************************************
!
          entry GRAMREC_RECLAIM (NSS_ACTIVE)
!
!This entry point counts the number of sub-sentences that are currently active.
!
!NSS_ACTIVE:  integer*2 scalar, the number of sub-sentence hypotheses that are
!             currently active.  (A sub-sentence being "active" means that
!             it may exist in a successful output sentence or sub-sentence.)
!
          NSS_ACTIVE = 0
          jh = 1
          do while (jh.le.max_ss .and. berr(jh).lt.err_max)
                  if (berr(jh).le.err_thresh) NSS_ACTIVE = NSS_ACTIVE+1
                  jh = jh+1
          end do
          return
!
!*****************************************************************************
!
          entry GRAMREC_MATCH (ID, ERROR, T1, T2, TWGT,
          1                    SENTERR, NWOUT, IDOPT, TIMES, SENTFLG)
!
!This entry point takes an input word hypothesis and builds with it an optimum
!sequence of words constrained by the grammar.  If the input word hypothesis
!completes a valid sentence, GRAMREC_MATCH is set true and the sentence and
!sentence statistics are output.
!
!ID:    integer*2 scalar, the word index of the input word hypothesis (IWH)
!
!ERROR: real*4 scalar, the recognition error for the IWH
!
!T1:    real*4 scalar, the beginning time (sec) for the IWH
!
!T2:    real*4 scalar, the ending time (sec) for the IWH
!
!TWGT:  real*4 scalar, the effective (energy weighted) time duration of the IWH
!
!f  ITERR:  real*4 scalar, the sentence error for the best sentence terminating
!                   on the input IWH.  This error should be negative.  (An
!                   error of zero is equivalent to a sentence with an
!                   average word error equal to the null-word error.)
!
!NWOUT:  integer*2 scalar, the number of words in the best sentence
!                   terminating on the input IWH
!
!IDOPT:   integer*2 array (xNWOUT), the word ID's of the words in the best
!                   sentence terminating of the input IWH
!
!TIMES:   real*4 array, (2xNWOUT), the beginning (TIMES(1,nw)) and ending
!                   times (TIMES(2,nw)) of the words in the best sentence
!
!SENTFLG:  logical*2 scalar, is .TRUE. if and only if the output sub-sentence
!                   is a complete sentence.  (If SENTFLG is not passed to
!                   GRAMREC_MATCH, then only complete sentences are
!                   returned to the calling program.)
!
          err_wrd = ERROR*EXP(rec_wta*TWGT/(1.0+TWGT/rec_wt_time))
          err_wrd = (t2-t1)*(err_wrd-err_null)
          end_of_sentence = .false.
          sub_sentence = .false.
          err_best = 9E9
```

18

```
                                                   ATTACHMENT A.5.
!
!find optimum backpointer for each node containing this word hypothesis
        jhj = jhyp
        do j=1,nwdns(ID)
            node = wdns(j,ID)
            ess_best = MIN(err_thresh-err_wrd,err_replaced)
            ibpbest = -1
!
!   look through all precursor nodes for a best fit
            do n=1,npcns(node)
                npc = pcns(n,node)
                if (npc.eq.0) then !precursor node is "start"
                    ehypc = 0.0
                    if (ehypc.lt.ess_best) then
                        ess_best = ehypc
                        ibpbest = 0
                    end if
                else !find best precursor node in previous hypotheses
                    nh = last_ss(npc)
!
!       search back through the phyp chain of SS hypotheses for best fit
                    do while (nh.gt.0)
                        if (ehyp(nh).lt.ess_best) then !looks better
                            if (thyp(nh).le.t1) then !is better
                                ess_best = ehyp(nh)
                                ibpbest = nh
                            else !word overlap -- add penalty
                                ehypc = ehyp(nh)+(thyp(nh)-t1)*err_over
                                if (ehypc.lt.ess_best) then !is better
                                        ess_best = ehypc
                                        ibpbest = nh
                                end if
                            end if
                        end if
                        nh = phyp(nh)
                    end do
                end if
            end do
!
!   save the best precursor SS for this word/node hypothesis
            if (ibpbest.ge.0) then !save SS
                err_hyp = ess_best+err_wrd
!
!       update best SS path error (do first to prevent the current path from
                jh = ibpbest                                    !appearing inactive)
                do while (jh.ne.0 .and. berr(jh).gt.err_hyp) !update berr
                        berr(jh) = err_hyp !ripple err_hyp back through all SS
                        jh = ihyp(jh)
                end do
!
!       find next available inactive SS
                jhj = 1+MOD(jhj,max_ss)
                do while (berr(jhj).lt.err_thresh) !find an inactive SS
                    if (jhj.eq.jhyp) then !SS overflow
                            SENTFLG = .false.
                            NWOUT = -1 !signal host of overflow error
                            SENTERR = err_max
                            GRAMREC_MATCH = .false.
                            return
                    end if
                    jhj = 1+MOD(jhj,max_ss)
                end do
                err_replaced = MIN(err_replaced,berr(jhj))
```

19

ATTACHMENT A.6.

```
!
!   reclaim inactive SS hypothesis
        if (phyp(jhj).gt.0) fhyp(phyp(jhj)) = fhyp(jhj) !delete SS
        if (fhyp(jhj).gt.0) then !delete SS from phyp chain
              phyp(fhyp(jhj)) = phyp(jhj)
        else if (nhyp(jhj).gt.0) then !check to reinitialize last_ss
              if (last_ss(nhyp(jhj)).eq.jhj) last_ss(nhyp(jhj)) = 0
        end if
!
!   save SS data
        ehyp(jhj) = err_hyp
        ihyp(jhj) = ibpbest
        iwrd(jhj) = ID
        bhyp(jhj) = t1
        thyp(jhj) = t2
        nhyp(jhj) = node
!
!   save chaining data and compute SS deactivation data
        berr(jhj) = ehyp(jhj)
        fhyp(jhj) = 0
        if (last_ss(node).ne.jhj) phyp(jhj) = last_ss(node)
        if (phyp(jhj).gt.0) fhyp(phyp(jhj)) = jhj
        last_ss(node) = jhj
!
!   save best SS hypothesis for the input word
        if (err_hyp.lt.err_best) then !update output SS
              err_best = err_hyp
              jall = jhj
              sub_sentence = .true.
              if (stopnode(node)) end_of_sentence = .true.
        end if
    end if
end do
jhyp = jhj
err_thresh = MIN(err_thresh,err_best+err_delt_max)
!
!output best sentence
        SENTFLG = end_of_sentence
        NWOUT = 0
        if (sub_sentence) then !get optimum path
              hyp = jall
              do while (hyp.ne.0) !count the number of words in optimum path
                    NWOUT = NWOUT+1
                    hyp = ihyp(hyp)
              end do
              hyp = jall
              do nw=NWOUT,1,-1 !backtrack to get the beg/end times
                    IDOPT(nw) = iwrd(hyp)
                    TIMES(1,nw) = bhyp(hyp)
                    TIMES(2,nw) = thyp(hyp)
                    hyp = ihyp(hyp)
              end do
              SENTERR = ehyp(jall)
              GRAMREC_MATCH = .true.
        else
              SENTERR = err_max
              GRAMREC_MATCH = .false.
        end if
        return
        end
```

## Claims

1. A speech recognition system (10) having a speech input device for receiving speech input and generating a continuous sequence of speech frames representing the speech, a plurality of reference templates, each template containing sequences of reference speech frames defining words to be recognized, word hypothesizer means (12) coupled to said speech input device and to said reference templates for matching the continuous sequence of speech frames with said reference templates as each new frame is received from said speech input device and generating at its output a plurality of

EP 0 242 743 B1

word hypotheses for all sequences of speech frames which match a reference template, each individual word hypothesis of said plurality of word hypotheses corresponding to a particular word of speech to be recognized being distinguished by an error value indicative of the degree of similarity between the hypothesized word and the reference template matched thereto and defining a confidence factor, and a start time and a stop time corresponding to the actual start and stop time of the sequence of speech frames from which the word hypothesis is generated by said word hypothesizer means, characterized by a grammar specification which defines all allowable sentences to be recognized; and sentence recognizer means (14) coupled to said grammar specification, said sentence recognizer means having an input coupled to the output of said word hypothesizer means as the coupling therebetween for receiving each word hypothesis as generated by said word hypothesizer means and determining whether such hypothesized word is a valid continuation, according to said grammar specification, of any partial sentence hypothesis generated so far, and if so, generating a new partial sentence hypothesis or complete sentence hypothesis including such hypothesized word, said sentence recognizer means being responsive to overlap of or gaps between hypothesized words as identified by start time and stop time data from said word hypothesizer means for generating error terms in addition to said error values defining said confidence factors for each of said word hypotheses, and said sentence recognizer means determining whether a hypothesized word is a valid continuation of any partial sentence hypothesis generated so far based upon an analysis of said error terms indicative of overlap of or gaps between hypothesized words and said error values defining said confidence factors for each of said word hypotheses.

2.  A speech recognition system as set forth in claim 1, wherein said sentence recognizer means generates a total sentence error including said error terms and said error values in determining a valid complete sentence hypothesis.

3.  A speech recognition system as set forth in claim 2, wherein said sentence recognizer means is provided with a predetermined sentence acceptance threshold as to the maximum total sentence error to be tolerated in determining a valid complete sentence hypothesis such that proposed complete sentence hypotheses exceeding said maximum total sentence error are rejected.

4.  A speech recognition system as set forth in claim 2, wherein said total sentence error is generated by said sentence recognizer means in accordance with the relationship:

$$\sum_{i+1}^{N+1} EW_i * (t_2^i - t_1^i) + ERR(t_1^i, t_2^{(i-1)})$$

where N = number of word hypotheses in the sentence;
$EW_i$ = average (frame) error for word hypothesis i;
$t_1^i$ = beginning time of word hypothesis i;
$t_2^i$ = ending time of word hypothesis i;
$t_2^0$ = beginning of speech time;
$t_1^{N+1}$ = end of utterance time;
ERR = error function for gap and overlap errors;
overlap if $t_1^i < t_2^{i-1}$; and
gap if $t_1^i > t_2^{i-1}$.

5.  A method for determining a best sentence hypothesis corresponding to a sequence of hypothesized words, each having a word error and start and stop times associated therewith, comprising the steps of:
    (a) generating all possible word hypotheses for an utterance and comparing each hypothesized word to a grammar specification;
    (b) determining whether, within the constraints of the grammar, each hypothesized word can be validly attached to the end of any existing partial sentence hypothesis and identifying such existing partial sentence hypotheses;

21

EP 0 242 743 B1

(c) creating new partial sentence hypotheses by attaching each hypothesized word to the end of an identified partial sentence hypothesis for each valid attachment;

(d) determining whether any partial sentence hypotheses are complete sentence hypotheses within the grammar specification;

(e) calculating a complete sentence hypothesis error for each complete sentence hypothesis, including

(e.1) associating a gap error with each hypothesized word which begins after the end of the last word in the partial sentence hypothesis identified in step (b); and

(f) selecting a complete sentence hypothesis based on the results of step (e).

6. The method of claim 5, wherein the selected complete sentence hypothesis is that complete sentence hypothesis which first has a complete sentence hypothesis error less than a predetermined threshold and which has no subsequent complete sentence hypotheses having complete sentence hypothesis errors less than its own.

7. The method of claim 5, wherein the selected complete sentence hypothesis is that complete sentence hypothesis which first has a complete sentence hypothesis error less than a predetermined threshold and which has no subsequent complete sentence hypotheses having complete sentence hypothesis errors less than its own which are generated within a predetermined period after its complete sentence hypothesis error is calculated.

8. The method of claim 5, wherein a partial sentence hypothesis error is calculated each time a new partial sentence is hypothesized, and wherein step (e) comprises the step of calculating a partial sentence hypothesis error for the partial sentence hypothesis ending in the newly added hypothesized word.

9. The method of claim 8, wherein the partial sentence hypothesis error calculation comprises the steps of:

(g) associating a word error with each hypothesized word;

(h) associating an overlap error with each hypothesized word which begins before the end of the last word in the partial sentence hypothesis identified in step (b);

(i) summing the errors associated with each hypothesized word in steps (f), (g) and (e.1) together with the partial sentence error of the partial sentence hypothesis identified in step (b) to give a new partial sentence hypothesis error; and

(j) associating the new partial sentence hypothesis error with the new partial sentence hypothesis created in step (c).

10. The method of claim 9, wherein the gap error of step (e.1) is zero whenever silence is associated with a gap between consecutive hypothesized words.

11. The method of claim 5, further including the step of:

(k) selecting a partial sentence hypothesis to be a best complete sentence hypothesis if a predetermined period elapses wherein no words are hypothesized.

12. The method of claim 5, further including the step of:

(l) aborting the best sentence determination if a predetermined period elapses wherein no words are hypothesized.

13. The method of claim 5, wherein the grammar specification includes states representing transitional utterances commonly occurring between selected pairs of connected words.

14. The method of claim 5, further comprising the step of:

(m) when a complete sentence is selected, changing to a second grammar specification, wherein additional partial and complete sentences are generated according to the second grammar specification.

15. The method of claim 14, wherein a complete sentence according to the first grammar must be followed by a pause.

22

**Patentansprüche**

1. Spracherkennungssystem (10) mit einer Spracheingabevorrichtung für den Empfang einer Spracheingabe und für die Erzeugung einer kontinuierlichen Folge von Sprachrahmen, die die Sprache repräsentieren, mehreren Referenzschablonen, von denen jede Folgen von Referenzsprachrahmen enthält, die zu erkennende Wörter definieren, einem Worthypothesemittel (12), das mit der Spracheingabevorrichtung und den Referenzschablonen gekoppelt ist, um die kontinuierliche Folge von Sprachrahmen mit den Referenzschablonen in Übereinstimmung zu bringen, wenn jeder neue Rahmen von der Spracheingabevorrichtung empfangen wird, und um an ihrem Ausgang mehrere Worthypothesen für alle Folgen von Sprachrahmen zu erzeugen, die mit einer Referenzschablone übereinstimmen, wobei einzelne Worthypothesen der mehreren Worthypothesen, die einen bestimmten Wort der zu erkennenden Sprache entsprechen, durch einen Fehlerwert unterschieden werden, der den Grad der Ähnlichkeit zwischen dem hypothetisch angenommenen Wort und der damit in Übereinstimmung gebrachten Referenzschablone angibt und einen Vertrauensfaktor sowie eine Startzeit und Stopzeit entsprechend der tatsächlichen Start- und Stopzeit der Erfolge von Sprachrahmen definiert, aus der die Worthypothese durch das Worthypothesemittel generiert wird, gekennzeichnet durch eine Grammatikspezifikation, die alle zulässigen, zu erkennenden Sätze definiert; und mit der Grammatikspezifikation gekoppelte Spracherkennungsmittel (14), wobei das Worterkennungsmittel einen mit dem Ausgang der Worthypthesemittel gekoppelten Eingang als Verbindung dazwischen aufweist für den Empfang jeder Worthypothese, wie sie von dem Worthypothesemittel erzeugt wird, und für die Bestimmung, ob das hypothetisch angenommene Wort entsprechend der Grammatikspezifikation eine gültige Fortsetzung einer bisher erzeugten Teil-Satzhypothese ist, und, falls dies zutrifft, zum Erzeugen einer neuen Teil-Satzhypothese oder einer Komplett-Satzhypothese einschließlich des hypothetisch angenommenen Worts, wobei das Satzerkennungsmittel abhängig von einer Überlappung oder von Lücken zwischen hypothetisch angenommenen Wörtern entsprechend der Identifizierung durch Startzeit- und Stopzeit-Daten aus den Worthypothesemitteln Fehlerausdrücke zusätzlich zu den die Vertrauensfaktoren für jede der Worthypothesen definierten Fehlerwerten erzeugt, und wobei das Satzerkennungsmittel auf der Basis einer Analyse der Fehlerausdrücke, die eine Überlappung oder Lücken zwischen hypothetisch angenommenen Wörtern anzeigen, sowie der die Vertrauensfaktoren für jede der Worthypothesen definierenden Fehlerwerte bestimmt, ob ein hypothetisch angenommenes Wort eine gültige Fortsetzung einer bisher erzeugten Teil-Satzhypothese ist.

2. Spracherkennungssystem nach Anspruch 1, bei welchem das Satzerkennungsmittel einen Gesamtsatzfehler einschließlich der Fehlerausdrücke und der Fehlerwerte bei der Bestimmung einer gültigen Komplett-Satzhypothese erzeugt.

3. Spracherkennungssystem nach Anspruch 2, bei welchem das Satzerkennungsmittel mit einer vorbestimmten Satzakzeptanzschwelle bezüglich des bei der Bestimmung einer gültigen Komplett-Satzhypothese zu tolerierenden maximalen Gesamtsatzfehlers versehen ist, so daß vorgeschlagene Gesamtsatzhypothesen, die den maximalen Satzfehler überschreiten, zurückgewiesen werden.

4. Spracherkennungssystem nach Anspruch 2, bei welchem der Gesamtsatzfehler von dem Satzerkennungsmittel gemäß der folgenden Beziehung erzeugt wird:

$$\sum_{i+1}^{N+1} EW_i * (t_2^{\ i} - t_1^{\ i}) + ERR(t_1^{\ i},\ t_2^{\ (i-1)})$$

wobei gilt:

$N$ = Anzahl der Worthypothesen im Satz;

$EW_i$ = mittlerer (Rahmen)-Fehler für die Worthypothese $i$;

$t_1^{\ i}$ = Beginnzeit der Worthypothese $i$;

$t_2^{\ i}$ = Beendigungszeit der Worthypothese $i$;

$t_2^{\ 0}$ = Beginn der Sprachzeit;

$t_1^{\ N+1}$ = Ende der Äußerungszeit;

ERR = Fehlerfunktion für Lücken und Überlappungsfehler;

wobei eine Überlappung vorliegt, wenn $t_1^i < t_2^{i-1}$ ist und eine Lücke vorliegt, wenn $t_1^i > t_2^{i-1}$ ist.

5. Verfahren zum Bestimmen einer besten Satzhypothese entsprechend einer Folge hypothetisch angenommener Wörter, denen jeweils ein Wortfehler sowie Start- und Stopzeiten zugeordnet sind, enthaltend die Schritte:

a) Erzeugen aller möglichen Worthypothesen für eine Äußerung und Vergleichen jedes hypothetisch angenommenen Worts mit einer Grammatikspezifikation;

b) Bestimmen, ob innerhalb der Einschränkungen der Grammatik jedes hypothetisch angenommene Wort gültig an das Ende einer vorhandenen Teil-Satzhypothese angefügt werden kann, und Identifizieren solcher existierender Teil-Satzhypothesen;

c) Erzeugen neuer Teil-Satzhypothesen durch Anfügen jedes hypothetisch angenommenen Worts an das Ende einer identifizierten Teil-Satzhypothese für jede gültige Anfügung;

d) Bestimmen, ob innerhalb der Grammatikspezifikation Teil-Satzhypothesen, Komplett-Satzhypothesen sind;

e) Berechnen eines Komplett-Satzhypothesenfehlers für jede Komplett-Satzhypothese, einschließlich

(e.1) Zuordnen eines Lückenfehlers zu jedem hypothetisch angenommenen Wort, das nach dem Ende des letzten Worts in der im Schritt (b) identifizierten Teil-Satzhypothese beginnt;

f) Auswählen einer Komplett-Satzhypothese auf der Basis der Ergebnisse des Schritts (e).

6. Verfahren nach Anspruch 5, bei welchem die ausgewählte Komplett-Satzhypothese diejenige Komplett-Satzhypothese ist, deren Komplett-Satzhypothesefehler zuerst kleiner als ein vorbestimmter Schwellenwert ist und die auf keine Komplett-Satzhypothesen folgen, deren Komplett-Satzhypothesenfehler kleiner als ihr eigener sind.

7. Verfahren nach Anspruch 5, bei welchem die ausgewählte Komplett-Satzhypothese diejenige Komplett-Satzhypothese ist, deren Komplett-Satzhypothesefehler zuerst kleiner als ein vorbestimmter Schwellenwert ist und auf die keine Komplett-Satzhypothesen folgen, deren Komplett-Satzhypothesenfehler kleiner als ihr eigener ist und die innerhalb einer vorbestimmten Periode erzeugt werden, nachdem ihr Komplett-Satzhypothesenfehler berechnet wird.

8. Verfahren nach Anspruch 5, bei welchem ein Teil-Satzhypothesefehler jedesmal berechnet wird, wenn ein neuer Teilsatz hypothetisch angenommen wird, und bei welchem der Schritt (e) den Schritt der Berechnung eines Teil-Satzhypothesefehlers für die Teil-Satzhypothese umfaßt, die mit dem neu hinzugefügten hypothetisch angenommenen Wort endet.

9. Verfahren nach Anspruch 8, bei welchem die Berechnung des Teil-Satzhypothesefehlers die folgenden Schritte umfaßt:

(g) Zuordnen eines Wortfehlers zu jedem hypothetisch angenommenen Wort;

(h) Zuordnen eines Überlappungsfehlers zu jedem hypothetisch angenommenen Wort, das vor dem Ende des letzten Worts, in der im Schritt (b) identifizierten Teil-Satzhypothese beginnt;

(i) Summieren der jedem hypothetisch angeordneten Wort in den Schritten (f), (g) und (e.1) zugeordneten Fehler zusammen mit dem Teil-Satzfehler der Teil-Satzhypothese, die im Schritt (b) identifiziert worden ist, damit sich ein neuer Teil-Satzhypothesefehler ergibt; und

(j) Zuordnen eines neuen Teil-Satzhypothesefehlers zu der im Schritt (c) erzeugten neuen Teil-Satzhypothese.

10. Verfahren nach Anspruch 9, bei welchem der Lückenfehler im Schritt (e.1) Null ist, wenn einer Lücke zwischen aufeinanderfolgenden hypothetisch angenommenen Wörtern Schweigen zugeordnet ist.

11. Verfahren nach Anspruch 5, ferner enthaltend den Schritt:

(k) Auswählen einer Teil-Satzhypothese als die beste Komplett-Satzhypothese, wenn eine vorbestimmte Periode verstrichen ist, in der keine Wörter hypothetisch angenommen worden sind.

12. Verfahren nach Anspruch 5, ferner enthaltend den Schritt:

(l) Abbrechen der Bestsatzbestimmung, wenn eine vorbestimmte Periode verstrichen ist, in der keine Wörter hypothetisch angenommen worden sind.

EP 0 242 743 B1

**13.** Verfahren nach Anspruch 5, bei welchem die Grammatikspezifikation Zustände enthält, die Übergangs-äußerungen repräsentieren, die gewöhnlich zwischen ausgewählten Paaren verbundener Wörter auftreten.

**14.** Verfahren nach Anspruch 5, ferner enthaltend den Schritt:
(m) Wechsel zu einer zweiten Grammatikspezifikation, in der zusätzliche Teil- und Komplettsätze gemäß der zweiten Grammatikspezifikation erzeugt werden, wenn ein Komplettsatz ausgewählt wird.

**15.** Verfahren nach Anspruch 14, bei welchem auf einen Komplettsatz gemäß der ersten Grammatik eine Pause folgen muß.

**Revendications**

**1.** Système de reconnaissance de la parole (10) comportant un dispositif d'entrée de signaux vocaux servant à recevoir un signal vocal d'entrée et produire une séquence continue de trames vocales représentant la conversation, et une pluralité de gabarits de référence, dont chacun contient des séquences de trames vocales de référence définissant des mots devant être reconnus, des moyens (12) formant des hypothèses concernant les mots et couplés audit dispositif d'entrée des signaux vocaux et auxdits gabarits de référence pour adapter la séquence continue de trames vocales auxdits gabarits de référence lorsqu'une nouvelle trame est reçue à partir du dispositif d'entrée de signaux vocaux, et pour produire, à leur sortie, une pluralité d'hypothèses concernant les mots pour toutes les séquences de trames vocales, qui concordent avec un gabarit de référence, chaque hypothèse individuelle concernant un mot parmi ladite pluralité d'hypothèses concernant des mots correspondant à un mot particulier de conversation devant être identifié, pouvant être distinguée par une valeur d'erreur indicative du degré de similitude entre le mot supposé et le gabarit de référence adapté à ce mot, et définissant un facteur de confiance, et un instant de démarrage et un instant d'arrêt correspondant aux instants réels de démarrage et d'arrêt de la séquence de trames vocales à partir de laquelle ladite hypothèse concernant un mot est produite par lesdits moyens formant des hypothèses concernant des mots, caractérisé par une spécification grammaticale qui définit toutes les phrases admissibles devant être reconnues; et des moyens (14) de reconnaissance de phrases couplés à ladite spécification grammaticale, lesdits moyens de reconnaissance de phrases comportant une entrée couplée à la sortie desdits moyens formant des hypothèses concernant les mots en tant que couplage entre ces moyens pour recevoir chaque hypothèse concernant un mot telle qu'elle est produite par lesdits moyens formant des hypothèses concernant les mots et déterminant si un tel mot supposé est une suite valable, conformément à ladite spécification grammaticale, une quelconque hypothèse concernant une phrase partielle produite jusqu'alors, et s'il en est ainsi, produire une nouvelle hypothèse concernant une phrase partielle ou une nouvelle hypothèse concernant une phrase complète incluant un tel mot supposé, lesdits moyens de reconnaissance de phrases répondant à un chevauchement de mots supposés ou à des intervalles entre des mots supposés, tels qu'ils sont identifiés par des données relatives à un instant de démarrage et à un instant d'arrêt, à partir desdits moyens formant des hypothèses concernant des mots pour produire des termes d'erreur en plus desdites valeurs d'erreur définissant lesdits facteurs de confiance pour chacune desdites hypothèses concernant des mots, et lesdits moyens de reconnaissance de phrases déterminant si un mot supposé est une continuation valable d'une quelconque hypothèse concernant une phrase partielle, produite jusqu'alors sur la base d'une analyse desdits termes d'erreur indicatifs d'un chevauchement de mots supposés ou d'intervalles entre des mots supposés et lesdites valeurs d'erreur définissant lesdits facteurs de confiance pour chacune desdites hypothèses concernant les mots.

**2.** Système de reconnaissance de la parole selon la revendication 1, dans lequel lesdits moyens de reconnaissance de phrases produisent une erreur de phrase totale incluant lesdits termes d'erreur et lesdites valeurs d'erreur lors de la détermination d'une hypothèse de phrase complète valable.

**3.** Système de reconnaissance de la parole selon la revendication 2, dans lequel lesdits moyens de reconnaissance de phrase sont pourvus d'un seuil prédéterminé d'acceptation d'une phrase concernant l'erreur maximale d'une phrase totale pouvant être tolérée, pour la détermination d'une hypothèse valable concernant une phrase complète, de telle sorte que des hypothèses proposées concernant une phrase complète dépassant ladite erreur maximale totale sur une phrase sont rejetées.

25

**4.** Système de reconnaissance de la parole selon la revendication 2, dans lequel ladite erreur totale sur une phrase est produite par lesdits moyens de reconnaissance de phrases conformément à la relation :

$$\sum_{i+1}^{N+1} EW_i * (t_2^i - t_1^i) + ERR(t_1^i, t_2^{(i-1)})$$

dans laquelle

$N$ = nombre d'hypothèses sur des mots dans la phrase;
$EW_i$ = erreur moyenne (de trame) pour une hypothèse i concernant un mot;
$t_1^i$ = instant de début de départ de l'hypothèse i concernant un mot;
$t_2^i$ = instant de fin de l'hypothèse i concernant un mot;
$t_2^0$ = début du temps de parole
$E_1^{n+1}$ = fin du temps de prononciation;
$ERR$ = fonction d'erreur concernant des erreurs d'intervalle et de chevauchement;
chevauchement si $t_1^i < t_2^{i-1}$; et
intervalle si $t_1^i > t_2^{i-1}$.

**5.** Procédé pour déterminer une meilleure hypothèse concernant une phrase, correspondant à une séquence de mots supposés, possédant chacun une erreur de mot et des instants de début et de fin associés à ce mot, comprenant les étapes consistant à :

(a) produire toutes les hypothèses possibles sur des mots pour la prononciation et comparer chaque mot supposé à une spécification grammaticale;

(b) déterminer si, dans les limites des contraintes de la grammaire, chaque mot supposé peut être raccordé valablement à la fin de n'importe quelle hypothèse existante concernant une phrase partielle et identifier de telles hypothèses existantes concernant des phrases partielles;

(c) création de nouvelles hypothèses concernant des phrases partielles par raccordement de chaque mot supposé à la fin d'une hypothèse identifiée concernant une phrase partielle pour chaque raccordement valable;

(d) détermination du fait que des hypothèses quelconques concernant des phrases partielles sont ou non des hypothèses concernant des phrases complètes dans le cadre de la spécification grammaticale;

(e) calculer une erreur sur une hypothèse concernant une phrase complète pour chaque hypothèse concernant une phrase complète, comprenant

(e.1) l'association d'une erreur d'intervalle à chaque mot supposé, qui commence après la fin du dernier mot dans l'hypothèse concernant une phrase partielle, identifiée lors de l'étape (b); et

(f) la sélection d'une hypothèse concernant une phrase complète, sur la base du résultat de l'étape (e).

**6.** Procédé selon la revendication 5, selon lequel l'hypothèse sélectionnée concernant une phrase complète est l'hypothèse concernant une phrase complète, qui possède une erreur d'hypothèse concernant une phrase complète, inférieure à un seuil prédéterminé et qui ne possède aucune hypothèse ultérieure concernant une phrase complète, possédant des erreurs d'hypothèses concernant la phrase complète, inférieures à sa propre erreur.

**7.** Procédé selon la revendication 5, selon lequel l'hypothèse sélectionnée concernant une phrase complète est l'hypothèse concernant une phrase complète, qui possède en premier une erreur inférieure à un seuil prédéterminé et qui ne comporte aucune hypothèse ultérieure concernant une phrase complète, possédant des erreurs inférieures à sa propre erreur et qui sont produites pendant une période prédéterminée une fois que l'erreur concernant l'hypothèse sur la phrase complète est calculée.

**8.** Procédé selon la revendication 5, selon lequel une erreur concernant une hypothèse relative à une phrase partielle est calculée chaque fois qu'une nouvelle phrase partielle est supposée, et selon lequel l'étape (e) inclut l'étape de calcul d'une erreur relative à l'hypothèse concernant l'hypothèse relative à la phrase partielle, dans le mot supposé, nouvellement ajouté.

**9.** Procédé selon la revendication 8, selon lequel le calcul de l'erreur concernant l'hypothèse relative à la phrase partielle comprend les étapes consistant à :

(g) associer une erreur de mot à chaque mot supposé;

(h) associer une erreur de chevauchement à chaque mot supposé, qui commence avant la fin du dernier mot dans l'hypothèse concernant la phrase partielle, identifiée lors de l'étape (b);

(i) additionner les erreurs associées à chaque mot supposé lors des étapes (f), (g) et (e.1) ainsi que l'erreur sur la phrase partielle de l'hypothèse concernant la phrase partielle, identifiée lors de l'étape (b), pour fournir une nouvelle erreur relative à l'hypothèse concernant la phrase partielle; et

(j) associer la nouvelle erreur sur l'hypothèse concernant la phrase partielle, à la nouvelle hypothèse concernant la phrase partielle, créée lors de l'étape (c).

**10.** Procédé selon la revendication 9, selon lequel l'erreur d'intervalle de l'étape (e.1) est nulle chaque fois qu'un silence est associé à un intervalle entre des mots supposés successifs.

**11.** Procédé selon la revendication 5, comprenant en outre les étapes consistant à :

(k) sélectionner une hypothèse concernant une séquence par une phrase partielle comme étant la meilleure hypothèse concernant une phrase complète, si un intervalle de temps prédéterminé s'écoule pendant lequel aucun mot n'est suppose.

**12.** Procédé selon la revendication 5, comprenant en outre l'étape consistant à :

(l) abandonner la détermination de la meilleure phrase si un intervalle de temps prédéterminé s'écoule, pendant lequel aucun mot n'est supposé.

**13.** Procédé selon la revendication 5, selon lequel la spécification grammaticale inclut des états représentant des prononciations transitoires apparaissant habituellement entre des couples sélectionnés de mots raccordés.

**14.** Procédé selon la revendication 5, comprenant en outre l'étape consistant à :

(m) lorsqu'une phrase complète est sélectionnée, passer à une seconde spécification grammaticale, les phrases partielles et complètes additionnelles étant produites conformément à la seconde spécification grammaticale.

**15.** Procédé selon la revendication 14, selon lequel une phrase complète conformément à la première grammaire doit être suivie par une pause.

*10*

*12*

INPUT
SPEECH

WORD
HYPOTHESIZER

WORD
HYPOTHESES

VOCABULARY/GRAMMAR
CONTROL

*14*

SENTENCE
SPECIFICATION

RECOGNIZED
SENTENCE

VOCABULARY
REFERENCE
TEMPLATES

GRAMMAR
SPECIFICATION

*Fig. 1*

WORD
ERROR
START-TIME
STOP-TIME

WORD
HYPOTHESIS

*Fig. 2*

STATE-ID
WORD
PARTIAL-SENTENCE-ERROR
START-TIME
STOP-TIME
SAME-STATE-POINTER
PREVIOUS-STATE-POINTER

SENTENCE
HYPOTHESIS

*Fig. 10*

FOUR

DEGREES

FOURTY

DEGREES

FOURTEEN

DEGREES

$t_1$     $t_2$   $t_3$   $t_4 t_5$         $t_6$   t →

*Fig. 3*

SEV    UN    AVAILABLE

$t_1$     $t_2$    $t_3$       $t_4$

*Fig. 4*

Fig.5

Fig. 9

EP 0 242 743 B1

START → 0 —PLACE→ 1 —CALL→ 2 —EXTENSION→ 3 —d→ 4 —d→ 5 —d→ 6 —d→ 7

0 —CALL→ 2

2 —d→ 4

4 —d→ (loop)

2 —OUTSIDE→ 8 —NUMBER→ 9 —d₁→ 10 —d→ 11 —d→ 12

8 —d₁→ 10

12 —d→ 4

*Fig.6*

Fig. 7: state 5 → state 6 transitions labeled ONE, TWO, THREE, FOUR, FIVE, SIX, SEVEN, EIGHT, NINE, ZERO, Oh

*Fig.7*

Fig. 8: A —THREE→ B —3:8→ D —EIGHT→ C ; B —EIGHT→ C

*Fig.8*

30